**Europäisches Patentamt**

**European Patent Office**

**Office européen des brevets**

(11) Publication number : **0 440 225 B1**

# EUROPEAN PATENT SPECIFICATION

(45) Date of publication of patent specification :
**19.04.95 Bulletin 95/16**

(51) Int. Cl.⁶ : **G03B 17/26,** G03B 1/20

(21) Application number : **91101285.4**

(22) Date of filing : **31.01.91**

(54) **Automatic film loading camera.**

(30) Priority : **01.02.90 JP 22539/90**
**02.02.90 JP 23793/90**

(43) Date of publication of application :
**07.08.91 Bulletin 91/32**

(45) Publication of the grant of the patent :
**19.04.95 Bulletin 95/16**

(84) Designated Contracting States :
**DE FR GB**

(56) References cited :
**US-A- 4 275 855**
**US-A- 4 482 229**
**US-A- 4 726 674**
**WPIL Database,week 8506,Derwent**
**pub.Ltd.London Class P82,85-036585/06 &**
**SU-1099305**

(73) Proprietor : **CANON KABUSHIKI KAISHA**
**30-2, 3-chome, Shimomaruko,**
**Ohta-ku**
**Tokyo (JP)**

(72) Inventor : **Kaihara, Shoji, c/o Tamagawa**
**Jigyosho**
**Canon K.K.,**
**770 Shimonoge,**
**Takatsu-ku**
**Kawasaki-shi, Kanagawa-ken (JP)**
Inventor : **Haraguchi, Shousuke, c/o**
**Tamagawa Jigyosho**
**Canon K.K.,**
**770 Shimonoge,**
**Takatsu-ku**
**Kawasaki-shi, Kanagawa-ken (JP)**

(74) Representative : **Pellmann, Hans-Bernd,**
**Dipl.-Ing. et al**
**Patentanwaltsbüro**
**Tiedtke-Bühling-Kinne & Partner**
**Bavariaring 4**
**D-80336 München (DE)**

## Description

Background of the Invention:

Field of the Invention:

This invention relates to a camera having a take-up spool arranged to wind a film thereon.

Description of the Related Art:

The known film driving methods which have been employed by the automatic-film-loading type cameras include a sprocket driving method in which the film is fed by means of a sprocket and a spool/sprocket driving method in which the film is driven by both a spool and a sprocket in the initial stage of taking up the film on the spool and, after that, the driving action of the sprocket is cancelled to have the film driven by the spool alone. However, the sprocket driving method not only causes a power loss as the film is moved to the spool through friction but also necessitates use of a complex mechanism. Meanwhile, the sprocket/spool driving method necessitates use of a one-way mechanism for the cancellation of the driving action of the sprocket halfway in the driving process. Therefore, that method also requires a complex mechanism.

To eliminate the drawbacks of these methods, a driving device of a spool driving type has been proposed in US-A-4 275 855 and US-A-4 726 674. This device has a claw provided on the spool and is arranged to engage the claw with the perforation provided in the film, so that the film can be driven solely by means of the spool.

However, since the spool-driving type driving device is arranged to pull the film out of a cartridge by catching the perforation of the film with the claw provided on the spool, the camera operator needs to carefully adjust the phase of the spool claw to that of the perforation of the film when loading the camera with the film. If the leader part of the film comes to deviate upward or downward from its position relative to the claw of the spool, the spool would be subjected to empty driving to disable the automatic film loading action.

Summary of the Invention:

It is an object of this invention to provide a camera which is capable of ensuring adequate automatic film loading. To attain this object, the camera according to the invention has at least two claws arranged on a film take-up spool in different positions shifted in the axial direction of the spool.

The above and other objects and features of the invention will become apparent from the following detailed description of embodiments thereof taken in connection with the accompanying drawings.

Brief Description of the Drawings:

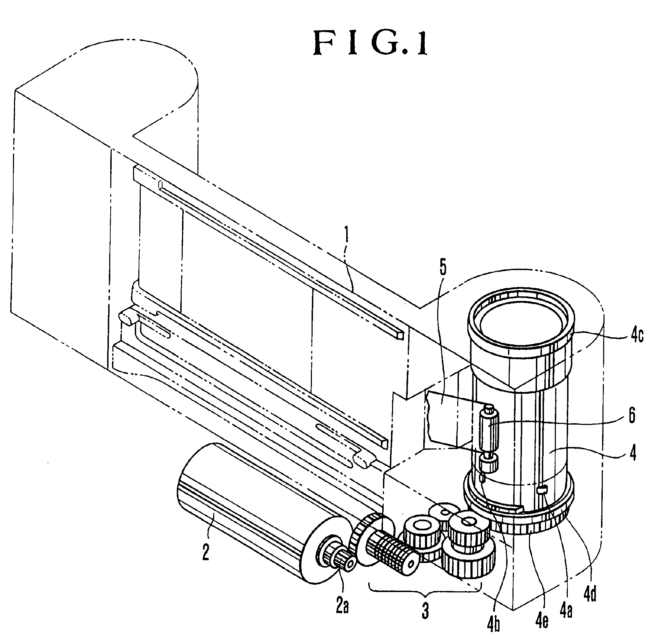

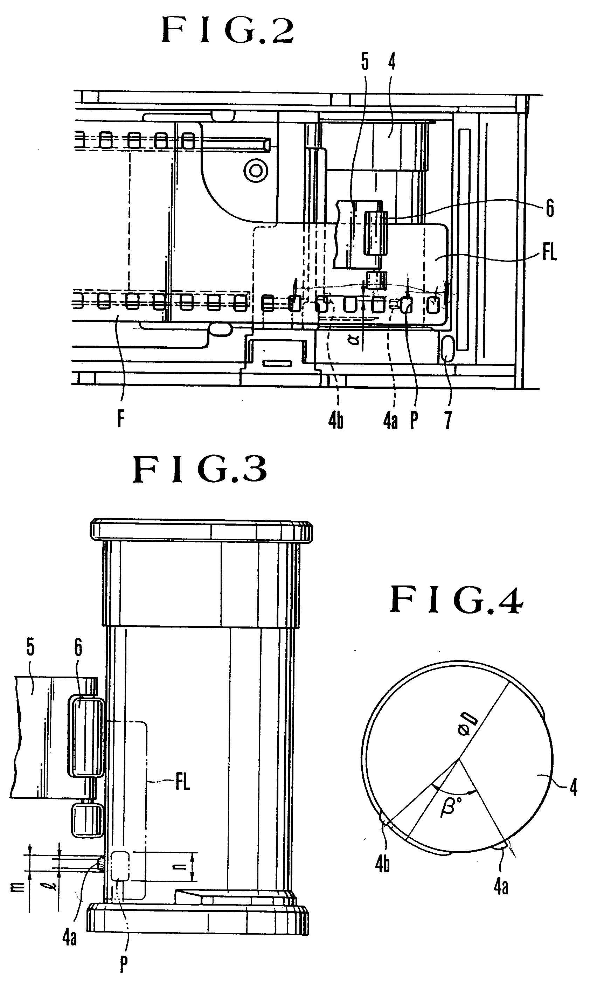

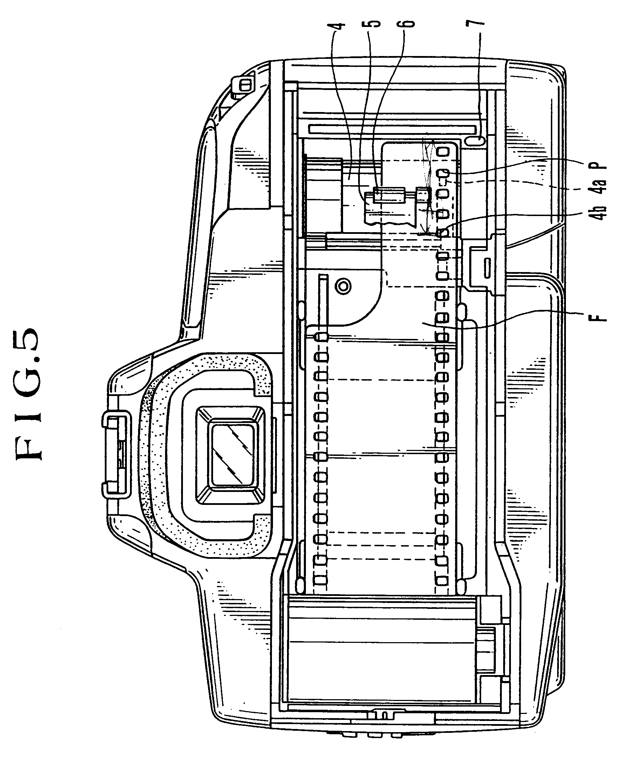

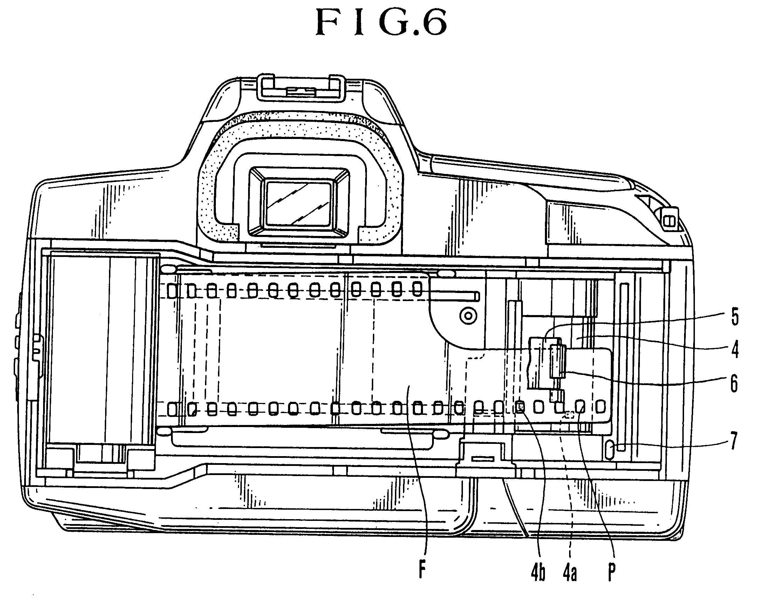

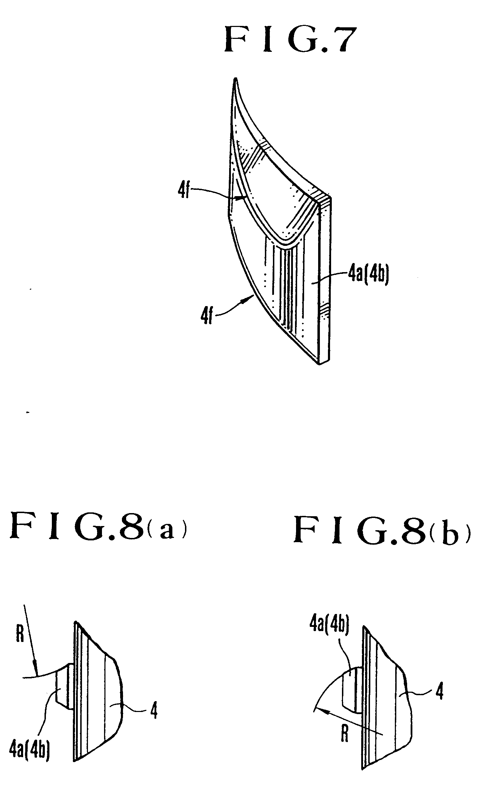

Fig. 1 is an oblique view showing the arrangement of the essential parts of a film driving device in a camera which is arranged as an embodiment of this invention. Fig. 2 is a plan view showing the parts of the same camera arranged round a spool. Fig. 3 is an enlarged side view of the spool shown in Fig. 2. Fig. 4 is a sectional view of the same spool. Figs. 5 and 6 are plan views showing the camera in a state of having a film set in position. Fig. 7 is an enlarged oblique view of a claw part of the spool. Figs. 8(a) and 8(b) are side views showing other examples of the claw part of the spool.

Detailed Description of the Preferred Embodiment:

The following describes the details of this invention through an embodiment thereof shown in the accompanying drawings:

Figs. 1 to 4 show the feature of this invention in a best suited manner. In Fig. 1, a reference numeral 1 denotes the body of a camera. A numeral 2 denotes a motor for feeding a film. A pinion gear 2a is fitted on the shaft end of the motor 2. A film winding gear train 3 is arranged to transmit the rotation in one direction (forward) of the motor 2 through a planetary gear mechanism which is not shown. A spool 4 is arranged to have the film wound thereon. Upper and lower flanges 4c and 4d are formed on the spool 4 and spaced at a distance larger than the width of the film, leaving some margins on both the upper and lower sides of the film. A gear 4e is formed at the lower end of the spool 4 and engages the gear train 3 to be rotated thereby. As shown in Figs. 2 and 4, claws 4a and 4b are formed on the circumferential surface of the spool 4 for catching the perforation P of the film F. The claws 4a and 4b have about the same shape. As shown in Fig. 3, assuming that the width of each of the claws 4a and 4b measures "$\ell$" at its fore end (in the radial direction of the spool) and "m" at its root, the side shape of it tapers in such a way as to satisfy the following relation with respect to the width "n" of each of perforation holes P of the film F:

$$\ell < m < n$$

In each of the claws 4a and 4b, portions 4f corresponding to ridgelines in the axial direction of the spool 4 are rounded as shown in Fig. 7. Both side portions of each of the claws 4a and 4b in the axial direction of the spool 4 may be either in a convex shape as shown in Fig. 8(a) or in a concave shape as shown in Fig. 8(b).

These claws 4a and 4b are located in positions which are shifted in the axial direction of the spool 4, as shown in Fig. 2.

In the case of this embodiment, the claw 4a is arranged to be located approximately in the middle of the perforation hole P when the film F is set in position on the camera. Meanwhile, the position of the other claw 4b is arranged to be shifted a little upward from the claw 4a to an extent $\alpha$. The shifting extent $\alpha$ is set approximately at a value of (n - $\ell$ )/2. In other words, when the film F is set in a position in which the phase of the perforation of the leader part FL of the film deviates upward from the rotating phase of the claw 4a to prevent the claw 4a from catching the perforation P, the other claw 4b catches the perforation P of the film leader part FL. Further, as shown in Fig. 4, in the rotating direction of the spool 4, the claw 4b is located in a position to be delayed by a small degree $\beta$ in such a way as not to overlap the claw 4a.

In the case of the embodiment illustrated, this degree $\beta$ is set at a value close to 90°. However, the degree $\beta$ is preferably set at a value as small as possible in such a way as to absorb any buoyant state of film that results from film tightening during the process of automatic film loading. When the winding diameter of the spool 4 is assumed to be D, the following condition is required to be satisfied:

$$\pi D \left(1 - \frac{\beta}{360}\right) > \text{"distance from a tip of the film}$$

leader part FL to a perforation hole P first caught by the claw 4a"

In the above condition, $\pi D (1 - \beta/360)$ approximately corresponds to the absorbable degree for the buoyant state of film which occurs when the film is tightened by film winding. If the above condition is not satisfied, the leader part FL of the film F comes to ride on the claw 4b. Under such a situation, the film might be loosely wound. Further, since the position of the claw 4b in the axial direction of the spool 4 is set to be higher than the claw 4a and the deviating degree $\beta$ is set to be relatively small, a state of having the film caught by the claw 4b instead of the claw 4a brings about almost no adverse effect on the film winding process.

A film guide 5 is turnably attached to the back cover of the camera which is not shown and is urged by a spring. A roller 6 which is rotatably carried by a shaft at the fore end of the film guide 5 is arranged to push the film against the spool 4 on a part above the claw 4b. An index mark 7 is provided on the right side of a spool chamber of the camera body 1 to be used for setting the film leader part FL.

The automatic film loading action of the embodiment is described as follows: A film cartridge is placed inside a cartridge chamber of the camera body 1 after the back cover of the camera is opened. The tip of the film leader part FL is set with reference to the index mark 7. After that, the back cover is closed. Then, the fore end of the film is sandwiched between the roller 6 and the spool 4. A motor control circuit which is not shown then starts the motor 2. The spool 4 is rotated through the gear train 3 in the direction of winding the film. Within a range where the perforation of the film can be caught by the claw 4a as shown in Fig. 5, the claw 4a enables the film F to be wound around the spool 4. Further, in a case where the leader part FL of the film F is set in an upward deviating position where the perforation P cannot be caught by the claw 4a as shown in Fig. 6, the other claw 4b enables the film to be wound around the spool 4. When the perforation P is caught either by the claw 4a or by the claw 4b, film tension results from this. Then, the undercut face of the claw 4a or 4b causes the tension to be received and dispersed to some degree by the width m of the claw 4a or 4b. Then, the ridgelines of the claw 4a or 4b which are rounded reduce the probability of damaging the perforation P of the film. The motor control circuit which is not shown then brings the rotation of the motor 2 to a stop after the motor 2 rotates to a given degree, which normally corresponds to three frames of the film. Automatic film loading thus comes to an end.

As described in the foregoing, in accordance with the arrangement of the embodiment, at least two claws are provided on the outer circumferential surface of the spool which is arranged to take up the film thereon. The position of one claw in the axial direction of the spool is arranged to be slightly shifted from that of the other claw. This arrangement enables the perforation of the film to be more reliably caught by one of the claws, so that the reliability of automatic film loading can be enhanced.

Further, in the embodiment described, the claws provided on the circumferential surface of the spool have a smaller width at their fore ends (in the radial direction of the spool) and a larger width at their root parts. In addition to this, the ridgelines on each of the two sides of the perforation receiving face of each of the claws are formed in an arcuate shape. That arrangement not only enables the perforation of the film to be more readily caught by the claw but also lessens the possibility that the film is damaged when its perforation is caught by the claw. Therefore, the reliability of automatic film loading can be further enhanced.

A camera comprises a film take-up spool which is arranged to have a film wound thereon; and a plurality of claws formed on the spool for the purpose of catching a perforation of the film. The claws are shifted from each other in position in the axial direction of the spool.

## Claims

1.  An automatic film loading camera comprising a take-up spool (4) for taking up a predefined type of film strip thereon; and

    a plurality of claws (4a, 4b) formed on the outer surface of said spool (4) so as to catch a perforation (P) of said film,
**characterized in that**
said claws (4a, 4b) are shifted from each other in position in the axial direction of said spool (4), and the width "m" of each of said claws (4a, 4b) at its root end in the axial direction of said spool, (4) the width "$\ell$" at its top end in the axial direction of said spool (4) and the width of said perforation (P) in the axial direction of said spool (4) "n", are such that the following relation is satisfied:

$$\ell < m < n.$$

2. A camera according to claim 1, wherein, the width of each of said claws (4a, 4b) "$\ell$" at its top end in the axial direction of said spool (4) and the width of said perforation (P) in the axial direction of said spool (4) "n", are such that the extent of the shifting to which said plurality of claws (4a, 4b) are shifted from each other in position in the axial direction of said spool (4) is expressed as follows:

$$\frac{n - \ell}{2}.$$

3. A camera according to claim 1, wherein the diameter of a film winding surface of said pool (4) "D" and the angle in degree between two adjacent consecutive claws of said plurality of claws (4a, 4b) measured with respect to the axis of said spool in a rotating direction of said spool (4) "β" are such that the following condition is satisfied:

$$\pi D \left(1 - \frac{\beta}{360}\right) > \text{the distance from a tip of a}$$

leader part (FL) of the film to a perforation (P) first caught by said claw (4a, 4b).

4. A camera according to claim 1, wherein the phase angle "β" in degree between two adjacent consecutive claws of said plurality of claws (4a, 4b) measured with respect to the axis of said spool in the rotating direction of said spool (4) is set to be less than 90 degrees.

5. A camera according to claim 1, further comprising a film guide (5) which is urged by a spring to push said film against said spool (4).

6. A camera according to claim 1, wherein said spool is arranged to be rotated by a motor (2) which is employed as a drive source.

7. A camera according to claim 5, wherein said plurality of claws and a pushing part of said film guide (5) are shifted from each other in position in the axial direction of said spool (4).

8. A camera according to claim 1, wherein said camera is arranged to perform an automatic film loading action to wind said film around said spool (4) by causing said spool (4) to be forcibly rotated in response to a closing action of a back cover.

9. A film winding device for a camera as claimed in claim 1, said device comprising a take-up spool (4) for taking up a predefined type of film strip thereon; and
a plurality of claws (4a, 4b) formed on the outer surface of said spool (4) so as to catch a perforation (P) of said film,
**characterized in that**
said claws (4a, 4b) are shifted from each other in position in the axial direction of said spool (4), and the width "m" of each of said claws (4a, 4b) at its root end in the axial direction of said spool, (4) the width "$\ell$" at its top end in the axial direction of said spool (4) and the width of said perforation (P) in the axial direction of said spool (4) "n", are such that the following relation is satisfied:

$$\ell < m < n.$$

10. A device according to claim 9, wherein the width of each of said claws (4a, 4b) "$\ell$" at its top end in the axial direction of said spool (4) and the width of said perforation (P) in the axial direction of said spool (4) "n", are such that the extent of the shifting to which said plurality of claws (4a, 4b) are shifted from each other in position in the axial direction of said spool (4) is expressed as follows:

$$\frac{n - \ell}{2}.$$

11. A device according to claim 9, wherein the diameter of a film winding surface of said spool (4) "D" and the phase angle in degree between two adjacent consecutive claws of said plurality of claws (4a, 4b) measured with respect to the axis of said spool in a rotating direction of said spool (4) "β" are such that the following condition is satisfied:

$$\pi D \left(1 - \frac{\beta}{360}\right) > \text{the distance from a tip of a leader}$$

part (FL) of the film to a perforation (P) first caught by said claw (4a, 4b).

12. A device according to claim 11, wherein the angle "β" in degreee between two adjacent consecutive claws of said plurality of claws (4a, 4b) measured with respect to the axis of said spool in the rotating direction of said spool (4) is set to be less than 90 degrees.

**Patentansprüche**

1. Kamera mit Filmeinlegeautomatik, die eine Aufnahmespule (4) zur Aufnahme eines vorbestimmten Typs eines Filmstreifens aufweist und eine Mehrzahl von Mitnehmern (4a, 4b), die auf der äußeren Oberfläche der Spule so ausgebildet sind, um die Perforation (P) des Films aufzugreifen, **dadurch gekennzeichnet,** daß die Mitnehmern (4a, 4b) in radialer Richtung der Spule (4) zueinander verschoben sind, und das die Breite "m" jeder der Mitnehmern (4a, 4b) an dem Fußende und die Breite "l" an dem vorderen Ende in radialer Richtung der Spule (4) so vorgesehen ist, daß folgende Beziehung erfüllt ist:

$$l < m < n.$$

2. Kamera nach Patentanspruch 1, wobei die Breite "l" eines jeden der Mitnehmer (4a, 4b) an ihrem vorderen Ende in axialer Richtung der Spule (4) und die Breite der Perforation (P) in axialer Richtung der Spule (4) so ist, daß die Erstreckung der Verschiebung, zu der die Vielzahl der Mitnehmer (4a, 4b) zueinander in axialer Richtung der Spule (4) verschoben sind, wie folgt ausgedrückt werden kann :

$$(n - l)/2.$$

3. Kamera nach Patentanspruch 1, wobei der Durchmesser "D" der Filmaufwickelfläche der Spule (4) und der Winkel in Grad zwischen zwei aufeinander folgenden Mitnehmern der Mehrzahl von Mitnehmern (4a,4b), der mit Bezug zur Spulenachse in Drehrichtung gemessen ist, so festgelegt wird, daß folgenden Bedingung erfüllt ist: $\pi \cdot D \cdot (1 - \beta/360) >$ Entfernung vom Anfang des Einzugsabschnitts FL des Films zu einer Perforation (P), die zuerst von dem Mitnehmer (4a,4b) erfaßt wird.

4. Kamera nach Patentanspruch 1, wobei der Phasenwinkel β in Grad zwischen zwei aufeinander folgenden Mitnehmern der Vielzahl von Mitnehmern (4a,4b), der mit Bezug zur Spulenachse in Drehrichtung gemessen ist, kleiner als 90 Grad ist.

5. Kamera nach Patentanspruch 1, die weiterhin eine Filmführung (5) aufweist, die mittels einer Feder den Film gegen die Spule (4) drückt.

6. Kamera nach Patentanspruch 1, wobei die Spule (4) mittels des Motors (2) drehbar ist, der als Antriebsquelle vorgesehen ist.

7. Kamera nach Patentanspruch 5, wobei die Vielzahl von Mitnehmern und ein Drückabschnitt der Filmführung (5) in axialer Richtung der Spule (4) zueinander verschoben sind.

8. Kamera nach Patentanspruch 1, wobei die Kamera zwangsläufig einen Filmeinzugsbetrieb ausführt, bei dem der Film auf die Spule (4) aufgewickelt wird, wenn die Rückwand der Kamera geschlossen wird.

9. Filmaufwickelvorrichtung für eine Kamera nach Patentanspruch 1, wobei die Vorrichtung einen Filmaufnahmespule (4) zur Aufnahme eines vorbestimmten Typs eines Filmstreifens aufweist und eine Vielzahl von Mitnehmer (4a,4b) auf der äußeren Oberfläche der Spule (4) so ausgebildet sind, daß sie in die Perforation (P) des Films greifen, dadurch gekennzeichnet, daß die Mitnehmer (4a,4b) in axialer Richtung der Spule zueinander verschoben sind und daß die Breite "m" am Fußende eines jeden Mitnehmers (4a,4b), die Breite "l" am vorderen Ende in axialer Richtung zur Spule und die Breite der Perforation (P) in axialer Richtung der Spule so festgelegt werden, daß die nachfolgende Beziehung erfüllt ist:

$$l < m < n.$$

10. Vorrichtung nach Patentanspruch 9, wobei die Breite "l" eines jeden der Mitnehmer (4a,4b) an seinem vorderen Ende in axialer Richtung der Spule (4) und die Breite "n" der Perforation (P) in axialer Richtung der Spule (4) so ist, daß die Verschiebung der Mitnehmer (4a,4b) zueinander in axialer Richtung der Spule (4) wie folgt ausgedrückt wird:

$$(n - l)/2.$$

11. Vorrichtung nach Patentanspruch 9, wobei der Durchmesser "D" der Filmaufwickeloberfläche der Spule (4) und der Winkel in Grad, der zwischen zwei aufeinderfolgenden Mitnehmern der Vielzahl von Mitnehmer (4a, 4b) in Drehrichtung der Spule mit Bezug auf die Spulenachse gemessen wird, so groß sind, daß folgende Beziehung erfüllt ist: $\pi \cdot D \cdot (1-\beta/360) >$ Entfernung vom Anfang des Einzugsabschnitts FL des Films zu einer Perforation P, die zuerst von dem Mitnehmer (4a,4b erfaßt wird."

12. Vorrichtung nach Patentanspruch 11, wobei der Winkel β zwischen zwei aufeinander folgenden Mitnehmern der Vielzahl von Mitnehmer (4a,4b), gemessen in Bezug zur Achse der Spule in Drehrichtung der Spule (4) weniger als 90 Grad beträgt.

**Revendications**

1. Appareil photographique à chargement automatique du film, comprenant une bobine réceptrice (4) agencée pour recevoir un type prédéfini de pellicule sur celle-ci, et

une pluralité de griffes (4a, 4b) formées sur la surface externe de ladite bobine (4), de manière à saisir une perforation (P) dudit film, caractérisé en ce que

lesdites griffes (4a, 4b) sont décalées l'une de l'autre dans la direction axiale de ladite bobine (4) et la largeur "m" de chacune desdites griffes (4a, 4b) à son extrémité de racine dans la direction axiale de ladite bobine (4), la largeur "$\ell$" au niveau de son extrémité supérieure dans la direction axiale de ladite bobine (4) et la largeur "n" de ladite perforation (P) dans la direction axiale de ladite bobine (4) sont telles que la relation suivante est remplie :

$$\ell < m < n.$$

2. Appareil photographique selon la revendication 1, dans lequel la largeur "$\ell$" de chacune desdites griffes (4a, 4b) au niveau de son extrémité supérieure dans la direction axiale de ladite bobine (4) et la largeur "n" de ladite perforation (P) dans la direction axiale de ladite bobine (4) sont telles que la valeur de décalage de laquelle ladite pluralité de griffes (4a, 4b) sont décalées l'une de l'autre en position dans la direction axiale de ladite bobine (4) est exprimée comme suit :

$$\frac{n - \ell}{2}$$

3. Appareil photographique selon la revendication 1, dans lequel le diamètre "D" de la surface d'enroulement de film de ladite bobine (4) et l'angle "β" en degrés entre deux griffes consécutives adjacentes de ladite pluralité de griffes (4a, 4b) mesuré par rapport à l'axe de ladite bobine dans le sens de rotation de ladite bobine (4) sont tels que la condition suivante est remplie :

$$\pi D \left(1 - \frac{\beta}{360}\right) > \text{la distance entre l'extrémité}$$

de la partie d'amorce (FL) du film à une perforation (P) saisie en premier par ladite griffe (4a, 4b).

4. Appareil photographique selon la revendication 1, dans lequel l'angle de phase "β" en degrés entre deux griffes consécutives adjacentes de ladite pluralité de griffes (4a, 4b) mesuré par rapport à l'axe de ladite bobine dans le sens de rotation de ladite bobine (4) est établi pour être inférieur à 90 degrés.

5. Appareil photographique selon la revendication 1, comprenant en outre un guide-film (5) qui est sollicité par un ressort afin de pousser ledit film contre ladite bobine (4).

6. Appareil photographique selon la revendication 1, dans lequel ladite bobine est agencée de manière à être entraînée en rotation par un moteur (2) qui est employé comme source d'entraînement.

7. Appareil photographique selon la revendication 5, dans lequel ladite pluralité de griffes et une partie poussante dudit guide-film (5) sont décalées l'une de l'autre en position dans la direction axiale de ladite bobine (4).

8. Appareil photographique selon la revendication 1, dans lequel ledit appareil photographique est agencé de manière à effectuer une action de chargement automatique du film afin d'enrouler ledit film autour de ladite bobine (4) en amenant ladite bobine (4) à être entraînée de force en rotation, en réponse à une action de fermeture du dos.

9. Dispositif d'enroulement du film pour un appareil photographique selon la revendication 1, ledit dispositif comprenant une bobine réceptrice (4) pour enrouler un type prédéfini de pellicule sur celle-ci, et

une pluralité de griffes (4a, 4b) formées sur la surface externe de ladite bobine (4) de manière à saisir une perforation (P) dudit film, caractérisé en ce que

lesdites griffes (4a, 4b) sont décalées l'une de l'autre en position dans la direction axiale de ladite bobine (4) et la largeur "m" de chacune desdites griffes (4a, 4b) à son extrémité de racine dans la direction axiale de ladite bobine (4), la largeur "$\ell$" au niveau de son extrémité supérieure dans la direction axiale de ladite bobine (4) et la largeur "n" de ladite perforation (P) dans la direction axiale de ladite bobine (4), sont telles que la relation suivante satisfaite :

$$\ell < m < n.$$

10. Dispositif selon la revendication 9, dans lequel la largeur "$\ell$" de chacune desdites griffes (4a, 4b) au niveau de son extrémité supérieure dans la direction axiale de ladite bobine (4) et la largeur "n" de ladite perforation (P) dans la direction axiale de ladite bobine (4) sont telles que la valeur de décalage delaquelle ladite pluralité de griffes (4a, 4b) sont décalées l'une de l'autre en position dans la direction axiale de ladite bobine (4) est exprimée comme suit :

$$\frac{n - \ell}{2}$$

11. Dispositif selon la revendication 9, dans lequel le diamètre "D" de la surface d'enroulement de film de ladite bobine (4) et l'angle de phase "β" en degrés entre deux griffes consécutives adjacentes de ladite pluralité de griffes (4a, 4b) mesuré par rapport à l'axe de ladite bobine dans le sens de rotation de ladite bobine (4) sont tels que la condition suivante est remplie :

$$\pi D \left(1 - \frac{\beta}{360}\right) > \text{la distance de l'extrémité de}$$

la partie d'amorce (FL) du film à une perforation (P) saisie en premier par ladite griffe (4a, 4b).

12. Dispositif selon la revendication 11, dans lequel l'angle "β" en degrés entre deux griffes consécutives adjacentes de ladite pluralité de griffes (4a, 4b) mesuré par rapport à l'axe de ladite bobine dans le sens de rotation de ladite bobine (4) est établi pour être inférieur à 90 degrés.

# FIG.1

EP 0 440 225 B1

# F I G.2

# F I G.3

# F I G.4

# FIG.5

F I G. 6

# FIG.7

# FIG.8(a)

# FIG.8(b)